# EUROPEAN PATENT APPLICATION

(11) **EP 2 899 955 A1**
(43) Date of publication of application: **29.07.2015**
(21) Application number: 14814665.7
(22) Date of filing: 01.08.2014
(51) Int. Cl.: H04M 1/725, G10L 17/00

(54) **TERMINAL VOICE CONTROL METHOD, DEVICE, AND TERMINAL**

(30) Priority: 15.11.2013 CN 201310574762
(71) Applicant: Huawei Device Co., Ltd., Longgang District Shenzhen Guangdong 518129 (CN)
(72) Inventor: WANG, Xiyong, Shenzhen Guangdong 518129 (CN); JIANG, Hongrui, Shenzhen Guangdong 518129 (CN); ZHENG, Weijun, Shenzhen Guangdong 518129 (CN); WANG, Qing, Shenzhen Guangdong 518129 (CN)
(74) Representative: Körber, Martin Hans
(86) International application number: PCT/CN2014/083507
(87) International publication number: WO 2015/070644

(57) **Abstract**

Embodiments of the present invention disclose a terminal voice control method. The method includes: when a voice instruction of a user is received, identifying the voice instruction, and extracting wake-up indication information from the voice instruction; performing voice verification on the voice instruction if the wake-up indication information is obtained by extracting; and after the voice verification succeeds, extracting processing indication information from the voice instruction, and responding to the voice instruction of the user according to the processing indication information. According to the terminal voice control method in the embodiments of the present invention, a user may use one voice instruction to control a terminal to complete multiple tasks without requiring voice interaction for multiple times, which is simple to use, and has high security performance.

## Description

This application claims priority to Chinese Patent Application No. CN 201310574762.8, filed with the Chinese Patent Office on November 15, 2013 and entitled "TERMINAL VOICE CONTROL METHOD AND APPARETUS, AND TERMINAL", which is incorporated herein by reference in its entirety.

### TECHNICAL FIELD

The present invention relates to the field of terminal technologies, and in particular, to a terminal voice control method and apparatus, and a terminal.

### BACKGROUND

With the development of science and technology, smartphones have become necessities in people's lives. In order to facilitate a user to perform an operation on a smartphone, most smartphones currently have a voice control function. A user can issue a voice instruction to a mobile phone, and the mobile phone makes a response to the voice instruction. However, in the prior art, the foregoing solution is implemented by separately invoking different voice engines for multiple times. For example, a voice wake-up engine and a voiceprint recognition engine are used to identify whether a user is the owner first, and then the mobile phone is woken up, and the mobile phone then inquires about a requirement of the user and directs the user to answer questions step by step. After the user answers the questions, the mobile phone identifies a voice instruction that is issued by the user when the user answers the questions, and executes the voice instruction of the user according to an identification result.

A defect of the foregoing voice control manner is that: multiple voice instructions are inconsecutive, resulting in that a user needs to be inquired step by step and directed to answer questions; a next step can be started only after the user finishes answering the questions; a process of performing each step is cumbersome, which causes great inconvenience for the user to use a voice control function of a mobile phone. When the mobile phone is standby, no instruction can be directly issued to the mobile phone. The mobile phone needs to be woken up before a further operation can be performed on the mobile phone.

### SUMMARY

According to a terminal voice control method provided in embodiments of the present invention, one voice instruction may be used to control a terminal to complete multiple tasks.

According to a first aspect, an embodiment of the present invention provides a terminal voice control method, including:
when a voice instruction of a user is received, identifying the voice instruction, and extracting wake-up indication information from the voice instruction;
performing voice verification on the voice instruction if the wake-up indication information is obtained by extracting; and
extracting, after the voice verification succeeds, processing indication information from the voice instruction, and responding to the voice instruction of the user according to the processing indication information.

With reference to the first aspect, in a first possible implementation manner of the first aspect, the extracting, after the voice verification succeeds, processing indication information from the voice instruction, and responding to the voice instruction of the user according to the processing indication information includes:
after the voice verification succeeds, if it is detected that a terminal is in a screen locking state, lighting up a terminal screen and unlocking the terminal screen, extracting the processing indication information from the voice instruction, and responding to the voice instruction of the user according to the processing indication information; and
after the voice verification succeeds, if it is detected that the terminal is not in a screen locking state, extracting the processing indication information from the voice instruction, and responding to the voice instruction of the user according to the processing indication information.

With reference to the first aspect, in a third possible implementation manner of the first aspect, the method further includes:
if no wake-up indication information is obtained by extracting, continuing to wait for receiving a voice instruction of the user.

With reference to the first aspect, in a fourth possible implementation manner of the first aspect, the method further includes:
prompting reverification if the voice verification fails, and stopping receiving a voice instruction of the user if the number of times of verification exceeds a threshold but the verification still fails.

With reference to the first aspect, in a fifth possible implementation manner of the first aspect, the extracting, after the voice verification succeeds, processing indication information from the voice instruction, and responding to the voice instruction of the user according to the processing indication information includes:
removing the wake-up indication information from the voice instruction, extracting the processing prompt information in the voice instruction, and converting the processing indication information into a text; and
identifying a meaning of the processing prompt information according to the text, and making a response according to the obtained meaning.

According to a second aspect, an embodiment of the present invention provides a terminal voice control apparatus, including:
a receiving unit, configured to, when a voice instruction of a user is received, identify the voice instruction, and extract wake-up indication information from the voice instruction;
a first extracting unit, configured to perform voice verification on the voice instruction if the wake-up indication information is obtained by extracting; and
a first processing unit, configured to, after the voice verification succeeds, extract processing indication information included in the voice instruction, and respond to the voice instruction of the user according to the processing indication information.

With reference to the second aspect, in a first possible implementation manner of the second aspect, the first processing unit includes:
a first executing module, configured to, after the voice verification succeeds, if it is detected that a terminal is in a screen locking state, light up a terminal screen and unlock the terminal screen, extract the processing indication information from the voice instruction, and respond to the voice instruction of the user according to the processing indication information; and
a second executing module, configured to, after the voice verification succeeds, if it is detected that the terminal is not in a screen locking state, extract the processing indication information from the voice instruction, and respond to the voice instruction of the user according to the processing indication information.

With reference to the second aspect, in a third possible implementation manner of the second aspect, the apparatus further includes:
a second extracting unit, configured to, if no wake-up indication information is obtained by extracting, continue to wait for receiving a voice instruction of the user.

With reference to the second aspect, in a fourth possible implementation manner of the second aspect, the apparatus includes:
a second processing unit, configured to prompt reverification when the voice verification fails, and stop receiving a voice instruction of the user if the number of times of verification exceeds a threshold but the verification still fails.

With reference to the second aspect, in a fifth possible implementation manner of the second aspect, the first processing unit includes:
a converting module, configured to remove the wake-up indication information from the voice instruction, extract the processing prompt information in the voice instruction, and convert the processing indication information into a text; and
a responding module, configured to identify a meaning of the processing prompt information according to the text, and make a response according to the obtained meaning.

According to a third aspect, an embodiment of the present invention further provides a terminal, where the terminal includes an audio monitoring unit and a processor, where:
the audio monitoring unit is configured to pick up a voice instruction issued by a user; and
the processor is configured to, when the voice instruction of the user is received, identify the voice instruction, and extract wake-up indication information from the voice instruction; perform voice verification on the voice instruction if the wake-up indication information is obtained by extracting; and after the voice verification succeeds, extract processing indication information from the voice instruction, and respond to the voice instruction of the user according to the processing indication information.

According to the terminal voice control method in the embodiments of the present invention, a user may use one voice instruction to control a terminal to complete multiple tasks without requiring voice interaction for multiple times, which is simple to use, and has high security performance.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of a terminal voice control method according to a first embodiment of the present invention;
FIG. 2 is a flowchart of a terminal voice control method according to a second embodiment of the present invention;
FIG. 3 is a flowchart of a terminal voice control method according to a third embodiment of the present invention;
FIG. 4 is a schematic structural diagram of a terminal voice control apparatus according to a fourth embodiment of the present invention;
FIG. 5 is a schematic structural diagram of a terminal voice control apparatus according to a fifth embodiment of the present invention;
FIG. 6 is a schematic structural diagram of a terminal voice control apparatus according to a sixth embodiment of the present invention; and
FIG. 7 is a schematic structural diagram of a terminal according to a seventh embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

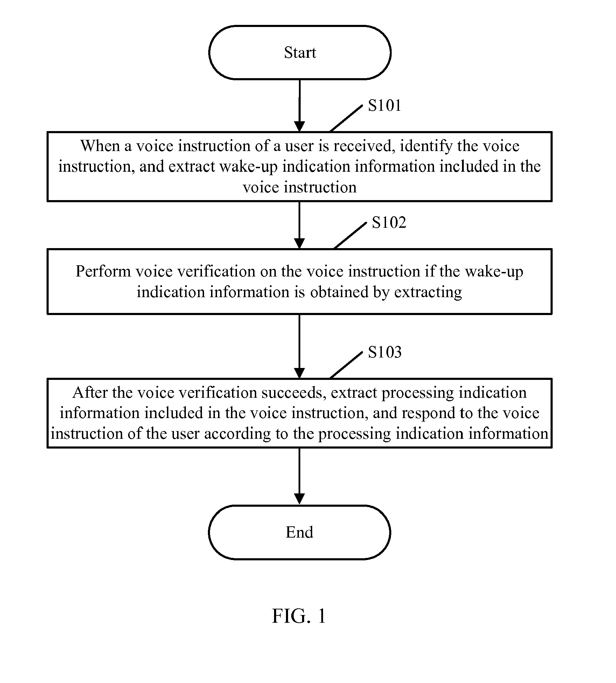

Refer to FIG. 1, which is a flowchart of a terminal voice control method according to a first embodiment of the present invention. A terminal described in this embodiment of the present invention includes an electronic device such as a mobile phone, a PDA, or a tablet computer. The method specifically includes:

S101. When a voice instruction of a user is received, identify the voice instruction, and extract wake-up indication information from the voice instruction.

Specifically, the voice instruction of the user includes the wake-up indication information and processing indication information, where the wake-up indication information is used to wake up a terminal that is in a screen locking state, and the processing indication information is used to instruct the terminal to execute a specific action.

Identifying the voice instruction of the user is detecting whether the voice instruction of the user includes a preset wake-up word, for example, a word preset by the user, such as hi or hello, so as to extract the wake-up indication information included in the voice instruction of the user.

S102. Perform voice verification on the voice instruction if the wake-up indication information is obtained by extracting.

Specifically, performing the voice verification on the voice instruction is performing voiceprint recognition on a voice in the voice instruction, so as to determine whether the user who issues the voice instruction is a preset user, so that only a user who passes the verification can use the terminal and further perform a voice operation on the terminal, thereby improving security performance of the terminal.

It should be understood that voiceprint recognition (Voiceprint Recognition) is also referred to as speaker recognition, which refers to identifying, according to a voice feature of a person, who speaks a segment of voice. Generally, voiceprint recognition includes two aspects: speaker identifying and speaker determining, where the former is to determine which one of several persons speaks a segment of voice, and the latter is to determine whether a segment of voice is spoken by a specified person. The voiceprint recognition manner in this embodiment of the present invention is speaker determining, that is, whether a segment of voice is spoken by a preset specified person needs to be identified.

S103. After the voice verification succeeds, extract processing indication information from the voice instruction, and respond to the voice instruction of the user according to the processing indication information.

Specifically, after the voice verification succeeds, the wake-up indication information is removed from the voice instruction; the processing prompt information in the voice instruction is extracted, and the processing prompt information is converted into a text; and a meaning of the processing indication information is identified according to the text, and a response is made according to the obtained meaning.

According to the terminal voice control method provided in this embodiment of the present invention, a user may use one voice instruction to control a terminal to complete multiple tasks without requiring voice interaction for multiple times, which is simple to use.

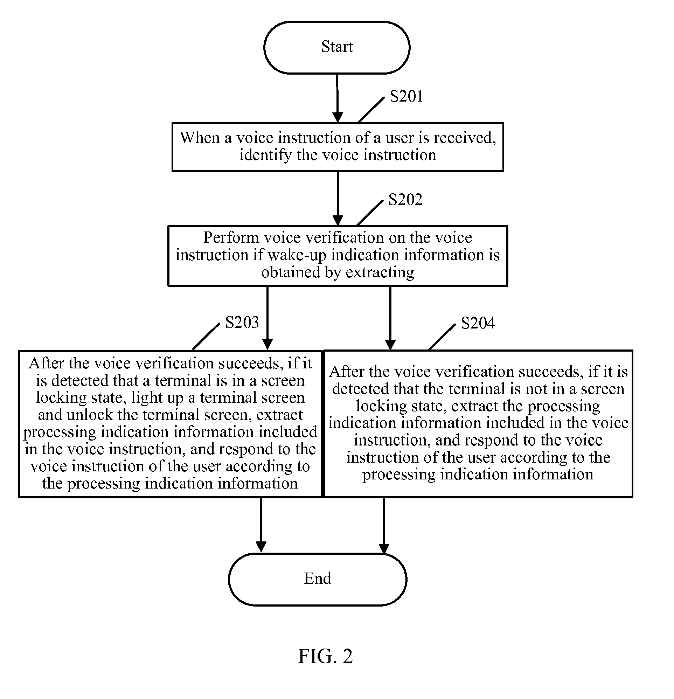

Refer to FIG. 2, which is a flowchart of a terminal voice control method according to a second embodiment of the present invention. A terminal described in this embodiment of the present invention includes an electronic device such as a mobile phone, a PDA, or a tablet computer. The method specifically includes:

S201. When a voice instruction of a user is received, identify the voice instruction.

Specifically, identifying the voice instruction of the user is detecting whether the voice instruction of the user includes a preset wake-up word, for example, a preset word such as hi or hello, so as to extract wake-up indication information from the voice instruction of the user.

S202. Perform voice verification on the voice instruction if wake-up indication information is obtained by extracting.

Specifically, performing the voice verification on the voice instruction is performing voiceprint recognition on a voice in the voice instruction, so as to determine whether the user who issues the voice instruction is a preset user, so that only a user who passes the verification can use the terminal, and further perform a voice operation on the terminal, thereby improving security performance of the terminal.

S203. After the voice verification succeeds, if it is detected that the terminal is in a screen locking state, light up a terminal screen and unlock the terminal screen, extract processing indication information from the voice instruction, and respond to the voice instruction of the user according to the processing indication information.

S204. After the voice verification succeeds, if it is detected that the terminal is not in a screen locking state, extract the processing indication information from the voice instruction, and respond to the voice instruction of the user according to the processing indication information.

Specifically, if it is detected that the terminal is in a screen locking state, the terminal that is in a screen locking state needs to be woken up first according to the wake-up indication information in the voice instruction, and then another step is performed. If the terminal is not in a screen locking state, the step of lighting up the terminal screen or unlocking the terminal screen does not need to be performed, and a next step is directly performed.

According to the terminal voice control method provided in this embodiment of the present invention, a user may use one voice instruction to control a terminal to complete multiple tasks without requiring voice interaction for multiple times, which is simple to use.

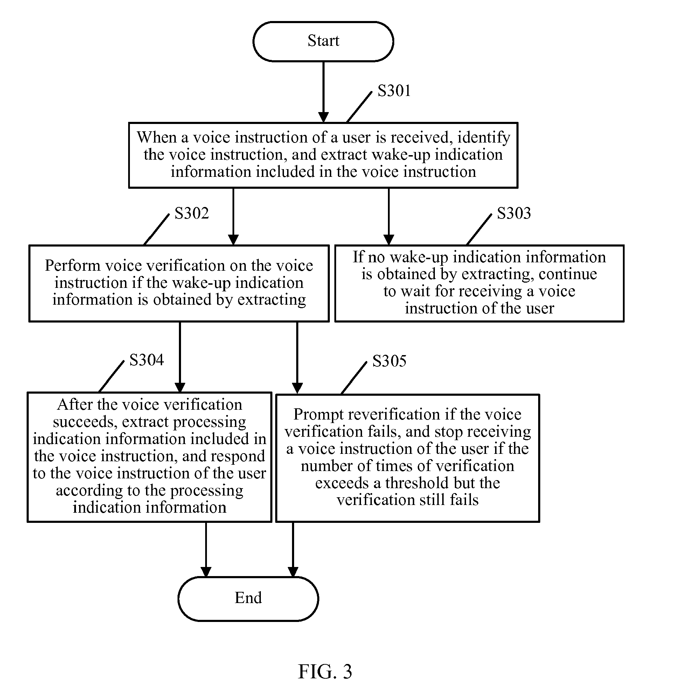

Refer to FIG. 3, which is a flowchart of a terminal voice control method according to a third embodiment of the present invention. A terminal described in this embodiment of the present invention includes an electronic device such as a mobile phone, a PDA, or a tablet computer. The method specifically includes:

S301. When a voice instruction of a user is received, identify the voice instruction, and extract wake-up indication information from the voice instruction.

Specifically, the voice instruction of the user includes the wake-up indication information and processing indication information, where the wake-up indication information is used to wake up a terminal that is in a screen locking state, and the processing indication information is used to instruct the terminal to execute a specific action.

Identifying the voice instruction of the user is detecting whether the voice instruction of the user includes a preset wake-up word, for example, a preset word such as hi or hello, so as to extract the wake-up indication information included in the voice instruction of the user.

S302. Perform voice verification on the voice instruction if the wake-up indication information is obtained by extracting.

Specifically, performing the voice verification on the voice instruction is performing voiceprint recognition on a voice in the voice instruction, so as to determine whether the user who issues the voice instruction is a preset user, so that only a user who passes the verification can use the terminal, and further perform a voice operation on the terminal, thereby improving security performance of the terminal.

S303. If no wake-up indication information is obtained by extracting, continue to wait for receiving a voice instruction of the user.

Specifically, if no wake-up indication information is obtained by extracting, the terminal does not perform any processing, and continues to wait for receiving a voice instruction of the user.

S304. After the voice verification succeeds, extract processing indication information from the voice instruction, and respond to the voice instruction of the user according to the processing indication information.

Specifically, after the voice verification succeeds, the wake-up indication information is removed from the voice instruction; the processing prompt information in the voice instruction is extracted, and the processing indication information is converted into a text; and a meaning of the processing prompt information is identified according to the text, and a response is made according to the obtained meaning.

S305. Prompt reverification if the voice verification fails, and stop receiving a voice instruction of the user if the number of times of verification exceeds a threshold but the verification still fails.

Specifically, if the number of times of verification exceeds the preset threshold but the verification still fails, a voice instruction of the user stops being received, and the user can only turn on a terminal screen manually, thereby ensuring security of using the terminal.

According to the terminal voice control method provided in this embodiment of the present invention, a user may use one voice instruction to control a terminal to complete multiple tasks without requiring voice interaction for multiple times, which is simple to use, and has high security performance.

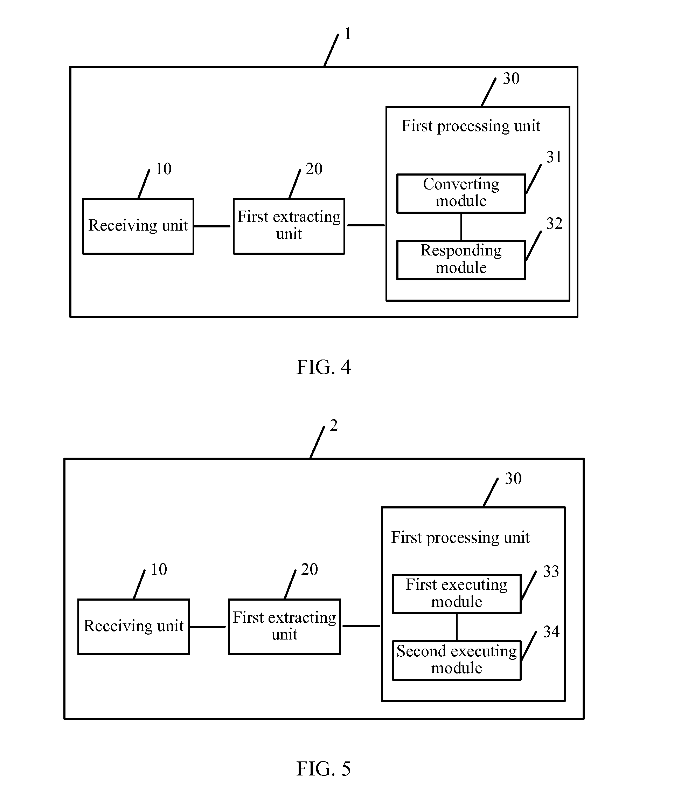

Refer to FIG. 4, which is a schematic structural diagram of a terminal voice control apparatus according to a fourth embodiment of the present invention. A terminal described in this embodiment of the present invention includes an electronic device such as a mobile phone, a PDA, or a tablet computer. The apparatus 1 specifically includes a receiving unit 10, a first extracting unit 20, and a first processing unit 30.

The receiving unit 10 is configured to, when a voice instruction of a user is received, identify the voice instruction, and extract wake-up indication information from the voice instruction.

Specifically, the voice instruction of the user includes the wake-up indication information and processing indication information, where the wake-up indication information is used to wake up a terminal that is in a screen locking state, and the processing indication information is used to instruct the terminal to execute a specific action.

Identifying the voice instruction of the user is detecting whether the voice instruction of the user includes a preset wake-up word, for example, a preset wake-up word such as hi or hello, so as to extract the wake-up indication information included in the voice instruction of the user.

The first extracting unit 20 is configured to perform voice verification on the voice instruction if the wake-up indication information is obtained by extracting.

Specifically, performing the voice verification on the voice instruction is performing voiceprint recognition on a voice in the voice instruction, so as to determine whether the user who issues the voice instruction is a preset user, so that only a user who passes the verification can use the terminal, and further perform a voice operation on the terminal, thereby improving security performance of the terminal.

The first processing unit 30 is configured to, after the voice verification succeeds, extract processing indication information from the voice instruction, and respond to the voice instruction of the user according to the processing indication information.

The first processing unit 30 includes a converting module 31 and a responding module 32.

The converting module 31 is configured to remove the wake-up indication information from the voice instruction, extract the processing prompt information in the voice instruction, and convert the processing indication information into a text.

The responding module 32 is configured to identify a meaning of the processing prompt information according to the text, and make a response according to the obtained meaning.

Specifically, after the voice verification succeeds, the wake-up indication information is removed from the voice instruction; the processing prompt information in the voice instruction is extracted, and the processing indication information is converted into a text; and a meaning of the processing prompt information is identified according to the text, and a response is made according to the obtained meaning.

According to the terminal voice control method provided in this embodiment of the present invention, a user may use one voice instruction to control a terminal to complete multiple tasks without requiring voice interaction for multiple times, which is simple to use.

Refer to FIG. 5, which is a schematic structural diagram of a terminal voice control apparatus according to a fifth embodiment of the present invention. A terminal described in this embodiment of the present invention includes an electronic device such as a mobile phone, a PDA, or a tablet computer. The apparatus 2 is an optimization of the apparatus 1 in FIG. 4. A first processing unit 30 of the apparatus 2 includes a first executing module 33 and a second executing module 34.

The first executing module 33 is configured to, after voice verification succeeds, if it is detected that the terminal is in a screen locking state, light up a terminal screen and unlock the terminal screen, extract processing indication information from the voice instruction, and respond to the voice instruction of the user according to the processing indication information.

The second executing module 34 is configured to, after the voice verification succeeds, if it is detected that the terminal is not in a screen locking state, extract the processing indication information from the voice instruction, and respond to the voice instruction of the user according to the processing indication information.

Specifically, if it is detected that the terminal is in a screen locking state, the step of lighting up the terminal screen and unlocking the terminal screen needs to be performed; if the terminal is not in a screen locking state, the step of lighting up the terminal screen and unlocking the terminal screen does not need to be performed.

In addition, performing voice verification on the voice instruction is using a voiceprint recognition method to verify whether the user who issues the voice instruction is a preset user, thereby improving security of the terminal.

According to the terminal voice control method provided in this embodiment of the present invention, a user may use one voice instruction to control a terminal to complete multiple tasks without requiring voice interaction for multiple times, which is simple to use.

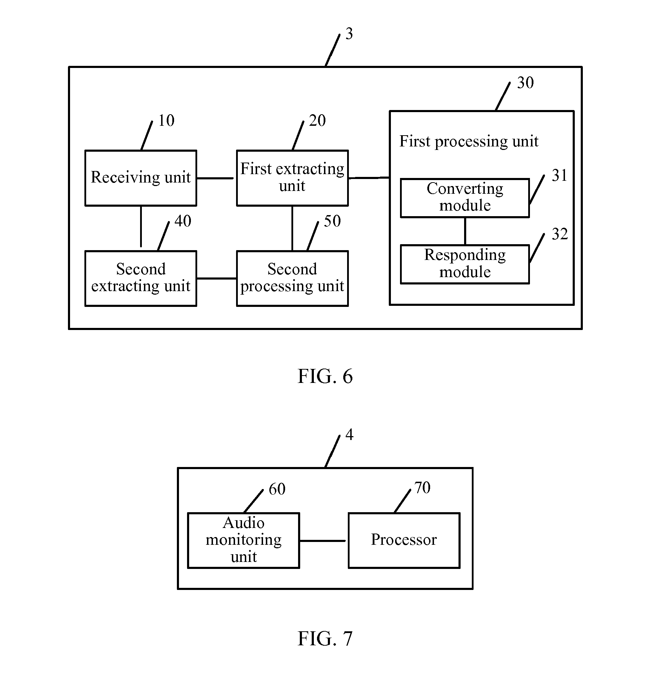

Refer to FIG. 6, which is a schematic structural diagram of a terminal voice control apparatus according to a sixth embodiment of the present invention. A terminal described in this embodiment of the present invention includes an electronic device such as a mobile phone, a PDA, or a tablet computer. The apparatus 3 is an optimization of the apparatus 1 in FIG. 4. The apparatus 3 further includes a second extracting unit 40 and a second processing unit 50.

The second extracting unit 40 is configured to, if no wake-up indication information is obtained by extracting, continue to wait for receiving a voice instruction of a user.

The second processing unit 50 is configured to prompt reverification when voice verification fails, and stop receiving a voice instruction of the user if the number of times of verification exceeds a threshold but the verification still fails.

Specifically, if the number of times of voice verification exceeds the preset threshold but the verification still fails, a voice instruction of the user stops being received, and the user can only turn on a terminal screen manually, thereby ensuring security of using the terminal.

According to the terminal voice control method provided in this embodiment of the present invention, a user may use one voice instruction to control a terminal to complete multiple tasks without requiring voice interaction for multiple times, which is simple to use, and has high security performance.

Refer to FIG. 7, which is a schematic structural diagram of a terminal according to a seventh embodiment of the present invention. The terminal described in this embodiment of the present invention includes an electronic device such as a mobile phone, a PDA, or a tablet computer. The terminal 4 specifically includes an audio monitoring unit 60 and a processor 70.

The audio monitoring unit 60 is configured to pick up a voice instruction issued by a user.

The processor 70 is configured to, when the voice instruction of the user is received, identify the voice instruction and extract wake-up indication information from the voice instruction; perform voice verification on the voice instruction if the wake-up indication information is obtained by extracting; and after the voice verification succeeds, extract processing indication information from the voice instruction, and respond to the voice instruction of the user according to the processing indication information.

Specifically, identifying the voice instruction of the user is detecting whether the voice instruction of the user includes a preset wake-up word, for example, a word such as hi or hello preset by the user, so as to extract the wake-up indication information included in the voice instruction of the user.

Performing the voice verification on the voice instruction is performing voiceprint recognition on a voice in the voice instruction, so as to determine whether the user who issues the voice instruction is a preset user, so that only a user who passes the verification can use the terminal, and further perform a voice operation on the terminal, thereby improving security performance of the terminal.

After the voice verification succeeds, the wake-up indication information is removed from the voice instruction; the processing prompt information in the voice instruction is extracted, and the processing indication information is converted into a text; and a meaning of the processing prompt information is identified according to the text, and a response is made according to the obtained meaning.

Definitely, in an exemplary implementation manner of this embodiment of the present invention, the audio monitoring unit 60 may be a microphone.

According to the terminal voice control method provided in this embodiment of the present invention, a user may use one voice instruction to control a terminal to complete multiple tasks without requiring voice interaction for multiple times, which is simple to use, and has high security performance.

It should be understood that the first extracting unit and the second extracting unit, the first processing unit and the second processing unit, and the first executing module and the second executing module do not imply a sequence relationship or quantity unit, but are intended to distinguish different modules or units.

Persons of ordinary skill in the art may understand that, various aspects or possible implementations of various aspects of the present invention may be specifically implemented in a system, method, or computer program product. Moreover, various aspects or possible implementations of various aspects of the present invention may take a form of computer program product, where the computer program product refers to computer readable program code stored in a computer readable medium.

A computer readable medium may be a computer readable signal medium or computer readable storage medium. The computer readable storage medium includes but not limited to electronic, magnetic, optical, electromagnetic, infrared, or semi-conductive system, device, or apparatus, or any suitable combination thereof, for example, a random access memory (RAM), a read only memory (ROM), an erasable programmable read only memory (EPROM or FLASH), an optical fiber, a compact disc read only memory (CD-ROM).

A processor in a computer reads computer readable program code stored in the computer readable medium, so that a specific function and action in each step or in a combination of steps in the flowcharts may be executed by the processor; generates an apparatus for implementing a specific function and action in each block or in a combination of blocks in the block diagrams.

Computer readable program code may be all executed on a user computer alone, or a part thereof may be executed on a user computer as a standalone software package, or a part thereof may be executed on a local computer while the other part is executed on a remote computer, or may be all executed on a remote computer or server. It should also be noted that, in some alternative implementation solutions, each step in the flowcharts or specific functions in each block in the block diagrams may not occur in the illustrated order. For example, two consecutive steps in the illustration which are dependent on an involved function, or two blocks may in fact be executed substantially simultaneously, or these blocks may sometimes be executed in a reverse order.

It is apparent that persons skilled in the art can make various modifications and variations to the present invention without departing from the spirit and scope of the present invention. The present invention is intended to cover these modifications and variations provided that they fall within the scope of protection defined by the following claims or their equivalent technologies.

## Claims

1. A terminal voice control method, comprising:
when a voice instruction of a user is received, identifying the voice instruction, and extracting wake-up indication information from the voice instruction;
performing voice verification on the voice instruction if the wake-up indication information is obtained by extracting; and
extracting, after the voice verification succeeds, processing indication information from the voice instruction, and responding to the voice instruction of the user according to the processing indication information.

2. The method according to claim 1, wherein the extracting, after the voice verification succeeds, processing indication information from the voice instruction, and responding to the voice instruction of the user according to the processing indication information comprises:
after the voice verification succeeds, if it is detected that a terminal is in a screen locking state, lighting up a terminal screen and unlocking the terminal screen, extracting the processing indication information from the voice instruction, and responding to the voice instruction of the user according to the processing indication information; and
after the voice verification succeeds, if it is detected that the terminal is not in a screen locking state, extracting the processing indication information from the voice instruction, and responding to the voice instruction of the user according to the processing indication information.

3. The method according to claim 1, further comprising:
if no wake-up indication information is obtained by extracting, continuing to wait for receiving a voice instruction of the user.

4. The method according to claim 1, further comprising:
prompting reverification if the voice verification fails, and stopping receiving a voice instruction of the user if the number of times of verification exceeds a threshold but the verification still fails.

5. The method according to claim 1, wherein the extracting, after the voice verification succeeds, processing indication information from the voice instruction, and responding to the voice instruction of the user according to the processing indication information comprises:
extracting the processing prompt information in the voice instruction after the wake-up indication information is removed from the voice instruction, and converting the processing indication information into a text; and
identifying a meaning of the processing prompt information according to the text, and making a response according to the obtained meaning.

6. A terminal voice control apparatus, comprising:
a receiving unit, configured to, when a voice instruction of a user is received, identify the voice instruction, and extract wake-up indication information from the voice instruction;
a first extracting unit, configured to perform voice verification on the voice instruction if the wake-up indication information is obtained by extracting; and
a first processing unit, configured to, after the voice verification succeeds, extract processing indication information from the voice instruction, and respond to the voice instruction of the user according to the processing indication information.

7. The apparatus according to claim 6, wherein the first processing unit comprises:
a first executing module, configured to, after the voice verification succeeds, if it is detected that a terminal is in a screen locking state, light up a terminal screen and unlock the terminal screen, extract the processing indication information from the voice instruction, and respond to the voice instruction of the user according to the processing indication information; and
a second executing module, configured to, after the voice verification succeeds, if it is detected that the terminal is not in a screen locking state, extract the processing indication information from the voice instruction, and respond to the voice instruction of the user according to the processing indication information.

8. The apparatus according to claim 6, further comprising:
a second extracting unit, configured to, if no wake-up indication information is obtained by extracting, continue to wait for receiving a voice instruction of the user.

9. The apparatus according to claim 6, comprising:
a second processing unit, configured to prompt reverification when the voice verification fails, and stop receiving a voice instruction of the user if the number of times of verification exceeds a threshold but the verification still fails.

10. The apparatus according to claim 6, wherein the first processing unit comprises:
a converting module, configured to extract the processing prompt information in the voice instruction after the wake-up indication information is removed from the voice instruction, and convert the processing indication information into a text; and
a responding module, configured to identify a meaning of the processing prompt information according to the text, and make a response according to the obtained meaning.

11. A terminal, comprising an audio monitoring unit and a processor, wherein:
the audio monitoring unit is configured to pick up a voice instruction issued by a user; and
the processor is configured to, when the voice instruction of the user is received, identify the voice instruction, and extract wake-up indication information from the voice instruction; perform voice verification on the voice instruction if the wake-up indication information is obtained by extracting; and after the voice verification succeeds, extract processing indication information from the voice instruction, and respond to the voice instruction of the user according to the processing indication information.
